## Europäisches Patentamt

## European Patent Office

## Office européen des brevets

(19)

(11) Veröffentlichungsnummer: **0 204 888**
**A1**

(12)

# EUROPÄISCHE PATENTANMELDUNG

(21) Anmeldenummer: **86102008.9**

(22) Anmeldetag: **17.02.86**

(51) Int. Cl.⁴: **F 23 G 5/04**

(30) Priorität: 02.03.85 DE 3507465
03.07.85 DE 3523677

(43) Veröffentlichungstag der Anmeldung:
**17.12.86** Patentblatt **86/51**

(84) Benannte Vertragsstaaten:
**AT BE CH DE FR GB IT LI LU NL**

(71) Anmelder: **Klöckner-Humboldt-Deutz
Aktiengesellschaft
Deutz-Mülheimer-Strasse 111 Postfach 80 05 09
D-5000 Köln 80(DE)**

(71) Anmelder: **Dyckerhoff Engineering GmbH
Biebricher Strasse 72
D-6200 Wiesbaden 1(DE)**

(72) Erfinder: **Hartmann, Rolf
Irisweg 29
D-5000 Köln 90(DE)**

(72) Erfinder: **Wolter, Albrecht, Dr.
Bismarckstrasse 40
D-5000 Köln 1(DE)**

(72) Erfinder: **Grigel, Wolfgang, Dr.
Im Grossen Deich 20
D-5204 Lohmar 1(DE)**

(72) Erfinder: **Herchenbach, Horst
Sonnenweg 6
D-5202 Hennef 1(DE)**

(72) Erfinder: **Grisar, Alexander
Am Eiskeller 21
D-6500 Mainz 21(DE)**

(74) Vertreter: **Beisner, Klaus, Dipl.-Ing. et al,
c/o KHD Humboldt Wedag AG Patente und Lizenzen
Wiersbergstrasse Postfach 91 04 57
D-5000 Köln 91(DE)**

(54) Verfahren zum Verbrennen von Abfallstoffen, insbesondere von Müll und Schlamm.

(57) Bei einem Verfahren zum Verbrennen von Abfallstoffen werden die Abfallstoffe in einem ersten Verfahrensschritt in einer Trocknungsstufe getrocknet, wobei Trocknerabgas anfällt, und in einem zweiten Verfahrensschritt in einer Brennstufe verbrannt, wobei Ofenabgas anfällt, wobei jeweils ein Teil Ofenabgas der Brennstufe und ein Teil Trocknerabgas der Trocknungsstufe abgezweigt und zu einem ersten Mischgas vermengt werden, und daß das erste Mischgas zur Trocknungsstufe zurückgeführt und zum Trocknen der Abfallstoffe verwendet wird, und der restliche Teil Ofenabgas mit dem restlichen Teil Trocknerabgas zu einem zweiten Mischgas vermengt, dessen Wärme genutzt werden kann, insbesondere zur Vorwärmung der Brennluft der Brennstufe. Nach diesem Verfahren läßt sich insbesondere auch bei Schlamm eine Mischgastemperatur von über 700 °C erreichen, und es gelingt damit auch die umweltgerechte Beseitigung feuchten Abfalls ohne Zusatzbrennstoffe.

./...

EP 0 204 888 A1

FIG.2

Anlage zum Patentgesuch der    - 1 -    K H D
DYCKERHOFF ENG. GMBH                 H 85/4/38
und der
Klöckner-Humboldt-Deutz
Aktiengesellschaft

Verfahren zum Verbrennen von Abfallstoffen,
insbesondere von Müll und Schlamm

---

Die Erfindung betrifft ein Verfahren zum Verbrennen von
Abfallstoffen, insbesondere von Müll, wobei die
Abfallstoffe in einem ersten Verfahrensschritt in einer
Trocknungsstufe getrocknet werden, wobei Trocknerabgas
anfällt, und in einem zweiten Verfahrensschritt in
einer Brennstufe verbrannt werden, wobei Ofenabgas
anfällt.

Die wirtschaftliche Beseitigung von Abfallstoffen, wie
insbesondere Müll, stellt ein schwieriges Problem dar.
Dies gilt insbesondere, wenn solche Abfallstoffe in
üblichen Müllverbrennungsanlagen beseitigt werden.
Diese sind vorwiegend mit Rostfeuerungen ausgestattet,
welche mit großem Luftüberschuß betrieben werden
müssen, um eine annähernd vollständige Verbrennung zu
gewährleisten. Beispielsweise sind bei solchen
Rostfeuerungen Luftüberschußzahlen von 1,8 bis 2,2
üblich. Hierdurch ergeben sich erhebliche Nachteile,
unter anderem dadurch, daß derart betriebene Feuerungen große Mengen an Rauchgas mit relativ geringer Temperatur beispielsweise 800 °C freisetzen. Der Wirkungsgrad einer in den abgasseitigen Rauchgasstrom eingeschalteten Einrichtung zur Gewinnung von Nutzenergie, beispielsweise zur Dampf- oder Stromerzeugung, ist infolgedessen relativ gering. Ferner bedingen große Mengen an Rauchgas große und somit kostenintensive Abgasreinigungsanlagen.

Als Folge von stofflicher Inhomogenität sowie unterschiedlichem Heizwert der Abfälle und der Schwierigkeit, diese im Rostofen zu durchwirbeln, um sie ausreichend mit Brennluft in Kontakt zu bringen, ergeben sich Zonen in der Feuerung, in denen beispielsweise eine Brenntemperatur von weniger als 800 °C erreicht wird und/oder Sauerstoffmangel herrscht. Diese Situation ist besonders während solcher Perioden kritisch, bei welchen relativ feuchter und/oder heizwertarmer Abfall zum Einsatz kommt. Dabei entstehen unkontrollierbare Bereiche unvollständiger Verbrennung in der Feuerung, in welchen sich bevorzugt in Anwesenheit von Chlor und/oder aromatischen Grundkörpern (zum Beispiel aus chlorhaltigen Kunststoffen, Ligninsulfonsäuren, Pentachlorphenol, polychlorierten Biphenylen, etc.) die im Abfall vorliegen, polychlorierte Dibenzodioxine und/oder Dibenzofurane, insbesondere TCDD und TCDF bilden. Insbesondere die Dioxine sind auch bei Temperaturen von 1000 °C noch sehr stabil, so daß sie in einer Rostverbrennungsanlage nicht zerfallen. So wurden bereits Dioxingehalte in der Flugasche und im Reingasstaub verschiedener Müllverbrennungsanlagen nachgewiesen ("Die Zeit", 02.03.1984 "Dioxin, der Rächer aus der Retorte").

Die extreme Giftigkeit der Dioxine ist bekannt ("Bild der Wissenschaft", Nov. 1984, S. 64 - 76). Die konventionelle Müllverbrennung ist somit allgemein in Frage gestellt (Chemical Engineering, June 6, 1983, S. 20 bis 64).

Theoretisch könnte man Dioxine, die bei der Verbrennung entstehen, wieder zum Zerfall bringen, indem der konventionellen Müllverbrennung eine Nachverbrennungsstufe mit einer Feuerungstemperatur von mindestens 1200 °C nachgeschaltet wird. Das würde jedoch erhöhte Investitionen sowie den Einsatz konventioneller Brennstoffe erfordern und wäre folglich mit einem unwirtschaftlich hohen Aufwand an Kosten verbunden.

Die Verbrennung bei relativ geringen Temperaturen hat weiterhin den Nachteil, daß nur ein geringer Teil der Schwermetalle beziehungsweise der Schwermetallverbindungen des Abfalls verflüchtigt wird. Der Rest wird mit der Schlacke ausgetragen, was die Verwertung dieser Schlacken für Straßenbau und ähnliche Anwendungsgebiete in Frage stellt.

Konventionelle Müllverbrennungsanlagen sind unwirtschaftlich, und es können sich wegen der Emission organischer Verbindungen sowie wegen der dabei anfallenden nichtlaugungsresistenten Aschen Umweltbelastungen ergeben.

Um die aufgezeigten Schwierigkeiten zu überwinden, wurde bereits vorgeschlagen, Haushaltsmüll beispielsweise bei der Herstellung von Portland-Zementklinker in die Verbrennungszone des Klinkerofens, wo hohe Temperaturen herrschen, einzuführen und darin zu verbrennen, und die aus dem Müll entstehende Asche schmelzflüssig dem Zementklinker beizumengen (DE-AS 23 38 318).

Ersichtlicherweise bedarf ein in dieser Weise zu einem Zementbrennprozeß als Zusatzbrennstoff beigesteuerter Abfall bzw. Müll einer sorgfältigen und infolgedessen relativ kostenträchtigen Aufbereitung. Desweiteren hat eine Koppelung von Müllverbrennung und Produktion von Zementklinker Grenzen und Schwierigkeiten.
Es muß sichergestellt sein, daß der Müll die Qualität des Brennproduktes Portlandzement nicht beeinträchtigt, und es kann daher immer nur ein relativ geringer Mengenanteil von Müll im Verhältnis zur Klinkerproduktion zugesetzt und verfeuert werden. Eine flexible Anpassung der Beseitigung von Müll an den Anfall von Müll ist somit nicht möglich, zumal vielerorts Zementbrennanlagen nicht zur Verfügung stehen. Darüberhinaus können Schwankungen in der Müllzusammensetzung, insbesondere bezüglich seines Heizwertes, infolge darin enthaltener Anteile von Wasser einerseits und brennbarer Stoffe andererseits, zu erheblichen Schwierigkeiten bei der Regelbarkeit des Brennprozesses führen.
Einer Abfallbeseitigung durch Verbrennen bei der Zementherstellung sind daher enge Grenzen gesetzt.

Die Verbrennung von Schlamm ist ein Sonderfall der Abfallbereitung. Schlamm aus städtischen und gewerblichen Kläranlagen weist gegenüber Müll einige wesentliche Unterschiede auf, die bei seiner Verbrennung zu speziellen Ofenbau- und Verfahrensarten führen. Während bei der Müllverbrennung im allgemeinen keine Entwässerung vorgesehen werden muß, ist das bei der Schlammverbrennung die Regel. Der Wassergehalt von Hausmüll, der auch von der Jahreszeit abhängt, schwankt zwischen 25 und 50 %. Der Wassergehalt des Schlammes ist demgegenüber oft mehr als doppelt so hoch und wird von der Jahreszeit kaum beeinflußt. Er ist jedoch stark abhängig von der Abwasserart (häusliche oder gewerbliche Abwässer), von dem jeweiligen Reinigungsverfahren (mechanische, biologische, chemische Reinigung) und von der anschließenden Schlammbehandlung (Schlammfaulung, Schlammeindickung). Der Heizwert des Mülls reicht im allgemeinen für seine Verbrennung aus und läßt unter Umständen sogar eine Gewinnung von Wärmeenergie zu. Dies ist bei der Schlammverbrennung normalerweise nicht der Fall.

Es ist ein Verfahren zur kombinierten Verbrennung von Müll und Schlämmen bekannt, bei welchem die bei der Müllverbrennung entstehenden heißen Abgase einer Schlammtrocknungsvorrichtung, vorzugsweise einer Schlammtrocknungstrommel, zugeleitet und in dieser im Gleichstrom mit den Schlämmen durch die Trocknungstrommel geführt werden, wobei die Schlämme bis auf einen eine Verbrennung gestattenden Wassergehalt vorgetrocknet und anschließend der Verbrennung zugeführt werden. Diese erfolgt unter Nutzung des eigenen Heizwertes in einem Etagenofen. Nach einem in der Vorveröffentlichung ausgeführten Anwendungsbeispiel wird im Etagenofen eine maximale Gastemperatur von 800 °C erreicht (DE-OS 17 51 233).

Ein ähnliches Verfahren zum kombinierten Trocknen und Verbrennen von Abfallstoffen ist auch der US-PS 2,177,487 zu entnehmen.

Von Nachteil sind hierbei einerseits die durch Verwendung von Etagenöfen im Verhältnis zur durchgesetzten Menge an Abfallstoffen entstehenden hohen Investitions- und Betriebskosten, und andererseits die für eine thermische Zersetzung von toxischen organischen Verbindungen unzureichenden Verbrennungs- und Abgastemperaturen.

Der Erfindung liegt die Aufgabe zugrunde, ein Verfahren anzugeben, welches gegenüber dem aufgezeigten Stand der Technik folgende verbesserte Eigenschaften aufweist:

a)  Es soll in wärmetechnischer Hinsicht wesentlich günstiger sein,

b)  die Emission von geruchsbelästigenden Verbindungen soll vermieden werden,

c)  die Abfallverbrennung soll bei hohen Temperaturen stattfinden, um die Emission von toxischen organischen Verbindungen, insbesondere von Dioxinen, zu vermeiden,

d)  Schlacke soll schmelzflüssig aus der Brennstufe ausgetragen werden, und damit in laugungsresistenter Form anfallen, die auch eine Weiterverwendung zum Beispiel als Baustoff oder als Zementklinker-Zusatz nicht ausschließt,

e)  Abgas der Brennstufe soll in möglichst geringer Menge und bei möglichst hohen Temperaturen anfallen, um einerseits eine wirtschaftlich Gewinnung von Nutzenergie aus Abfallwärme zu ermöglichen, und andererseits die Kosten für die Abgas-Endreinigung so niedrig wie möglich zu halten,

f) eine flexible Anpassung des Verfahrens an unterschiedlichen Heizwert infolge unterschiedlicher Beschaffenheit und insbesondere unterschiedlichen Wasser- und Brennstoffgehaltes der Abfallstoffe soll problemlos möglich sein,

g) es sollen sich Abfallstoffe mit hohem Wassergehalt, insbesondere Klärschlämme, wirtschaftlich aufarbeiten lassen,

h) das Verfahren soll unkompliziert und leicht regelbar sein.

Die Lösung der gestellten Aufgabe gelingt bei einem Verfahren der eingangs genannten Art mit der Erfindung dadurch, daß jeweils ein Teil Ofenabgas der Brennstufe und ein Teil Trocknerabgas der Trocknungsstufe abgezweigt und zu einem ersten Mischgas vermengt werden, und daß das erste Mischgas zur Trocknungsstufe zurückgeführt und zum Trocknen der Abfallstoffe verwendet wird, und daß der restliche Teil Ofenabgas mit dem restlichen Teil Trocknerabgas zu einem zweiten Mischgas vermengt wird, und daß dessen Wärmeinhalt zur Gewinnung von Nutzenergie verwendet wird.

Mit dem Verfahren nach der Erfindung ergeben sich eine Reihe von Vorteilen:

a) durch Trocknung der Abfallstoffe wird deren Heizwert erhöht, infolgedessen erhöht sich auch die Brenntemperatur,

b) der getrocknete Abfall ist leichter zündfähig und somit besser ausbrennbar, infolgedessen kann die Verbrennung mit nur geringem Luftüberschuß bei hohen Brenntemperaturen betrieben werden,

c) Abgas der Brennstufe wird einerseits um die Wasserdampfmenge reduziert und fällt andererseits bei Betrieb der Brennstufe im stöchiometrischen Bestpunkt mengenmäßig an der theoretisch untersten Grenze an,

d) die mit wenigstens 1200 °C vorgesehene Brenntemperatur ist ausreichend, um organische und insbesondere toxische Verbindungen in ihre elementaren Bestandteile thermisch zu zerlegen und damit unschädlich zu machen,

e) weil das aus dem Gaskreislauf der Trocknungsstufe abgeführte Trocknerabgas mit dem sehr heißen Ofenabgas zum zweiten Mischgas vermengt wird, werden in diesem Mischgas so hohe Temperaturen erreicht, daß die geruchsbelästigenden Komponenten im Abgas thermisch zerstört werden,

f) die Wirtschaftlichkeit der Gewinnung von Nutzenergie aus Abfallwärme wird verbessert,

g) die Endreinigung der annähernd auf das theoretische Mindestmaß reduzierten Abgasmenge wird kostengünstiger ermöglicht.

h) auch Schlämme mit einem hohen Feuchtegehalt werden bei ausreichend hohen Temperaturen im Brennraum thermisch so in elementare Bestandteile zerlegt, daß praktisch keine geruchsbelästigten Komponenten mehr im Abgas vorhanden sind.

Eine Ausgestaltung sieht dabei vor, daß das Trocknerabgas in einer Trennstufe von mitgeführten, nicht gasförmigen Stoffen getrennt wird und die abgetrennten Stoffe den zu verbrennenden Abfällen
zugeschlagen werden.

Mit Vorteil sieht eine weitere Ausgestaltung des
Verfahrens vor, daß der Wärmeinhalt des zweiten
Mischgases in zwei Stufen zur Gewinnung von Nutzenergie
verwendet wird, wobei in einer ersten Stufe, auf
relativ hohem Temperaturniveau, beispielsweise Dampf
oder mechanische oder elektrische Energie gewonnen und
in einer zweiten Stufe auf relativ niedrigem
Temperaturniveau Nutzwärme an ein Wärmeträgermedium,
vorzugsweise zum Erwärmen der Brennluft für die
Brennstufe, abgegeben wird.

Dies kann zum Beispiel in der Weise vorgenommen werden,
daß Wärme des zweiten Mischgases in der ersten Stufe
verwendet wird, um mittels einer Heißgasturbine
mechanische beziehungsweise elektrische Energie zu
erzeugen.

Erwärmte Brennluft ergibt bekanntlich den Vorteil, daß
die Brenntemperatur in der Brennstufe hohe Werte
erreicht, vorzugsweise Temperaturen im Bereich um
beziehungsweise über 1200 °C.
Auf diese Weise gelingt eine Nutzung des verwertbaren
Wärmeinhalts des zweiten Mischgases mit hohem
wärmetechnischem Nutzeffekt.

Zur Deckung des Bedarfs an Wärmeenergie für die
erforderliche Trocknungsleistung der Trocknungsstufe
wird dem ersten Mischgas zwischen 40 und 80
Volumenprozent, fallweise zwischen 55 und 70
Volumenprozent der Trocknungsabgasmenge, und zwischen 5
und 40 Volumenprozent, vorzugsweise zwischen 10 und 20
Volumenprozent der Ofenabgasmenge zugeführt.

Eine hierbei als erfindungswesentlich vorgesehene Einstellung der Mengenverhältnisse dieser Gase beim ersten Mischgas ermöglicht eine Betriebsweise der Trocknungsstufe jeweils im Bestpunkt in flexibler Anpassung an Durchsatz, Beschaffenheit und insbesondere Feuchtigkeit der Abfallstoffe.

Mit Vorteil ist hierfür vorgesehen, daß das Verhältnis der dem ersten Mischgas zugeführten Trocknerabgasmenge zur Ofenabgasmenge nach Maßgabe der Temperatur des ersten Mischgases eingestellt wird.

Im Falle einer annähernd gleichmäßigen Belastung der Trocknungsstufe kann mit diesem unkomplizierten Regelungsverfahren eine gleichbleibende gute Trocknungsleistung erbracht werden. Umgekehrt kann eine Flexibilität in der Leistung der Trocknungsstufe mit einem vorteilhaft-unkomplizierten Verfahren zur Regelung dadurch erreicht werden, daß die Temperatur des ersten Mischgases nach Maßgabe der erforderlichen Leistung der Trocknungsstufe, das heißt nach Maßgabe der durchgesetzten Menge der Abfallestoffe und deren durchschnittlichem Wassergehalt je kg feuchtem Abfall, eingestellt wird.

Und schließlich kann eine vorteilhafte Regelung der Trocknungsstufe auch so vorgenommen werden, daß die Temperatur des ersten Mischgases – durch Einstellung der Mengenverhältnisse von Trocknerabgas und Ofenabgas – nach Maßgabe der Temperatur des Trocknerabgases am Ausgang der Trocknungsstufe eingestellt wird.

Bei Voraussetzung einer annähernd gleichbleibenden Trocknungsleistung der Trocknungsstufe kann ein betriebliches Gleichgewicht der Parameter mit Vorteil sehr unkompliziert dadurch erreicht werden, daß die Trocknungsstufe mit gleichbleibend eingestellter Temperatur entweder des Mischgases am Eingang, oder des Trocknerabgases am Ausgang betrieben wird.

In jedem Falle dient die eine oder andere Art der Regelung dem Ziel, in Anpassung an den Leistungsbedarf der Trocknungsstufe nach Maßgabe von Menge, Art und Feuchtigkeit der Abfallstoffe, diese im Bestpunkt zu fahren und ein vorgetrocknetes und aufgelockertes Brenngut zu liefern.

Die Erreichung dieses Ziels ist die Voraussetzung bei den in Koppelung betriebenen Trocknungs- und Brennstufen, um einen einwandfreien Ausbrand der Abfallstoffe mit dem geringstmöglichen Luftüberschuß bei hohen Brenntemperaturen und ohne Einsatz hochwertiger Fremd-Brennstoffe zu erreichen.

Auf diese Weise gelingt es mit dem Verfahren, die Feuerung durch einen kontrollierten Trocknungsprozeß so intensiv zu betreiben, daß eine Garantie für die restlose Vernichtung toxischer organischer Verbindungen im Abgas, im Staub des Abgases, und in den Rückständen der Feuerung von seiten des Betriebes gegeben und tatsächlich auch eingehalten werden kann.

Weiter ist vorgesehen, daß die Abfallstoffe vor der Trocknung zerkleinert werden.
Sie werden hierdurch besser aufgeschlossen, dabei intensiver getrocknet, zünden eher und brennen infolgedessen besser aus.

Mit Vorteil wird der getrocknete Abfall unmittelbar nach seiner Trocknung und vorzugsweise unter Erhalt seines infolge der Trocknung erreichten fühlbaren Wärmeinhalts der Verbrennung zugeführt.

Um einerseits eine Auflockerung der Abfallstoffe sowohl in der Trocknungsstufe als auch in der Brennstufe zu erreichen, ist mit der Erfindung weiter vorgesehen, daß zur Trocknung der Abfallstoffe eine Trockentrommel vorzugsweise mit eingebauten Hub- und Zerteilungsmitteln und zur Verbrennung der Abfallstoffe ein Drehrohrofen verwendet wird. Beide Aggregate ergeben infolge ihrer Umwälzbewegungen und insbesondere im Zusammenwirken mit eingebauten Hubmitteln ein Optimum an Auflockerung und Bewegung der Abfallstoffe mit dem Ergebnis von bestmöglichem Oberflächenkontakt zwischen Feststoff und Trocknungsbeziehungsweise Brenngas, und ermöglichen durch ihre Unkompliziertheit und Regelbarkeit, beispielsweise der Umdrehungsgeschwindigkeit, die jeweilige Einstellung optimaler Betriebszustände. Auch ist der Durchsatz im Verhältnis zu den Investitionskosten dieser Aggregate wirtschaftlich sehr günstig.

Mit Vorteil ist zur zusätzlichen chemischen oder adsorptiven Bindung von Schadstoffen vorgesehen, daß die Verbrennung der Abfallstoffe unter Zugabe von kalkhaltigen Mineralstoffen, vorzugsweise in Form von Gesteinsmehl, vorgenommen wird.

Insbesondere bei relativ feuchten und/oder heizwertarmen Abfällen ist es vorteilhaft, die Luft für die Verbrennung des Abfalls, beispielsweise durch indirekten Wärmetausch mit dem zweiten Mischgas vorzuwärmen, um auch solche Abfälle bei hohen Temperaturen verbrennen zu können.

Eine spezielle Verfahrensvariante sieht vor, daß die Asche der Brennstufe schmelzflüssig in ein Wasserbad ausgetragen wird. Mit Vorteil fällt dabei die Schlacke in laugungsresistenter Form an und kann entweder gefahrlos deponiert oder wirtschaftlich genutzt werden, beispielsweise als Baustoffzuschlag, zum Beispiel für Schwarzdecken-Mischgut, oder als Zuschlag bei der Vermahlung von Klinker zu Fertigzement, oder für ähnliche Zwecke.

Eine besonders vorteilhafte Variante des erfindungsgemäßen Verfahrens ist dadurch gekennzeichnet, daß als Abfallstoff Schlamm, insbesondere Klärschlamm, alleine oder in Verbindung mit anderen Abfallstoffen eingesetzt wird und zumindest ein Teil der Nutzenergie zur Vorerwärmung der Verbrennungsluft für die Brennstufe eingesetzt wird. Bei ausreichend hohen Temperaturen im Brennraum werden so auch sehr feuchte Abfallstoffe in ihre elementaren Bestandteile zerlegt und im Abgas sind keine unerwünschten Komponenten mehr vorhanden.

Bei einer bevorzugten Verfahrensvariante beträgt die Temperatur des zweiten Mischgases mindestens 700 °C, wobei Zusatzbrennstoff in die Brennstufe einzuspeisen ist, wenn der Wassergehalt des Schlamms zu groß sein sollte, um diese Temperatur zu erreichen.

Mit Vorteil sieht eine Ausgestaltung des Verfahrens vor, die Verbrennungsluft auf Temperaturen bis 800 °C vorzuwärmen. Je höher die Verbrennungsluft vorgewärmt wird, um so besser sind die Verbrennungsbedingungen, um so sicherer werden die organischen Verbindungen zerstört. Die Verbrennungsrückstände werden dabei häufig geschmolzen, was zur Vergleichmäßigung der Asche beiträgt.

- 14 -                                    0204888

Es ist ein Verfahren besonders bevorzugt, bei dem die
Verbrennungsluft mit Hilfe eines Feststoffes als
Wärmeübertragungsmedium vorerwärmt wird. Es gelingt
damit in einfacher Weise, eine Wärmemenge von
hochtemperiertem Ofenabgas auf die Verbrennungsluft zu
übertragen und diese bevorzugt bis 800 °C vorzuwärmen.

Bei einer bevorzugten Ausgestaltung des Verfahrens ist
vorgesehen, daß das Wärmeübertragungsmedium,
vorzugsweise in feinkörniger Form vorliegend,
mineralische Feststoffe wie beispielsweise Kalk oder
Kalkstein, enthält, deren Komponenten Aktivitäten zur
chemischen oder adsorptiven Bindung von bei der
Abfallverbrennung freigesetzten Schadstoffen besitzen.
Besonders bevorzugt ist Kalksteinmehl oder
Zementrohmehl. Es kann kostengünstig hergestellt
werden, und es wird bei hohen Temperaturen entsäuert;
solches hochreaktive Material bewirkt die
Neutralisation der Ofenabgase, da es die bei der
Verbrennung freigesetzten Schadstoffe chemisch
beziehungsweise adsorptiv bindet. Dadurch kann die
sonst übliche separate Rauchgaswäsche entfallen.

Bei einer anderen Ausgestaltung des Verfahrens wird als
Wärmeübertragungsmedium ein Teil der beim
Abfallverbrennungsprozeß anfallenden, vorzugsweise
granulierten Schlacke verwendet.

Die Wärmeübertragung der Ofenabgase auf die
Verbrennungsluft kann in der Weise erfolgen, daß das
Wärmeübertragungsmedium in einer Aufheizstufe in
Kontakt mit dem Ofenabgasstrom aufgeheizt, danach in
eine Kühlstufe überführt und darin in Kontakt mit Luft
gekühlt und dabei die Luft zur
Verbrennungslufttemperatur aufgeheizt wird. Um eine möglichst wirtschaftliche Nutzung des Wärmeinhalts der Ofenabgase zu erreichen, kann vorgesehen werden, daß Wärme des Ofenabgases, in Strömungsrichtung gesehen, zunächst teilweise auf den Wärmeübertragungsfeststoff übertragen, danach zur Energieumwandlung und schließlich nochmals zur Wärmeübertragung auf den Wärmeübertragungsfeststoff für dessen Vorwärmung verwendet wird.

Der Vorteil dieser stufenweisen Wärmeübertragung liegt darin, daß bei jeder dieser Stufen ein für den vorgesehenen Zweck vorteilhaftes Intervall der Ofenabgastemperatur genutzt wird, wobei beispielsweise zur Erzeugung von Nutzenergie Ofenabgas mit einem noch relativ hohen Temperaturniveau zur Verfügung steht, und die Abwärme aus der Erzeugung der Nutzenergie zur Vorwärmung des Feststoffes verwendet wird, während der heißeste Wärmebereich des Ofenabgases für eine möglichst hochgradige Erhitzung des Feststoffes zur Verfügung steht. Die nicht zur Erwärmung des Wärmeübertragungsmediums genutzte Wärmeenergie des Ofenabgases kann anderweitig wärmewirtschaftlich zum Beispiel für Dampf-, Fernwärme- und/oder Stromerzeugung verwendet werden.

Eine Verfahrensvariante sieht vor, als Wärmeübertragungsmedium einen Teil der beim Abfallverbrennungsprozeß anfallenden, vorzugsweise granulierten Schlacke zu verwenden. Zur Verbesserung des Wirkungsgrades der Wärmeübertragung als auch für den Wirkungsgrad bei der Reinigung und Neutralisation des Ofenabgases soll das Wärmeübertragungsmedium in feinkörniger Form, vorzugsweise in Form von Feststoffmehl eingesetzt werden.

Bei einer weiteren Ausgestaltung der Erfindung ist vorgesehen, daß das Aufheiz- und Kühlstufen durchlaufende Wärmeübertragungsmedium wenigstens zum überwiegenden Teil mehrfach im Kreislauf durch das Wärmeübertragungssystem geführt wird und ihm nach Maßgabe seiner Anreicherung mit Schadstoffen frischer Feststoff zugeführt und verbrauchter Feststoff abgeführt wird. Hierdurch wird einerseits eine wärmewirtschaftlich günstige Ausnutzung des nach Erhitzung der Verbrennungsluft noch Wärme enthaltenden Feststoffes erreicht und ferner findet eine optimale Reinigung beziehungsweise Neutralisation des Ofenabgases bei minimalem Feststoffverbrauch statt.

In einer vorteilhaften Ausgestaltung des Verfahrens ist vorgesehen, daß die Abfallverbrennung mit einem Brenngas durchgeführt wird, welches gegenüber der Verbrennungsluft einen erhöhten Sauerstoffgehalt aufweist, beziehungsweise daß zusätzlich zur vorgewärmten Verbrennungsluft Sauerstoff in die Feuerung der Brennstufe eingespeist wird. Es wird dadurch eine Intensivierung der Verbrennung bewirkt und die Ofenabgasmenge verringert.

Um einer schädlichen Bildung von Stickoxiden bei hohen Verbrennungstemperaturen vorzubeugen, beziehungsweise diese abzubauen, kann bei der Wärmeübertragung vom Ofenabgas auf den Wärmeübertragungsfeststoff durch Zugabe von Brennstoff eine reduzierende Atmosphäre eingestellt werden und nach vollzogenem Wärmeaustausch der im Abgas enthaltene Brennstoff durch Zugabe von Verbrennungsluft nachverbrannt werden, wozu vorzugsweise auch vorerwärmte Verbrennungsluft eingesetzt werden soll.

Die Erfindung wird im folgenden mit ihren Vorteilen anhand zweier in Blockschaltbildern gezeigten Ausführungsbeispiele sowie anhand von Wärmeberechnungen näher erläutert.

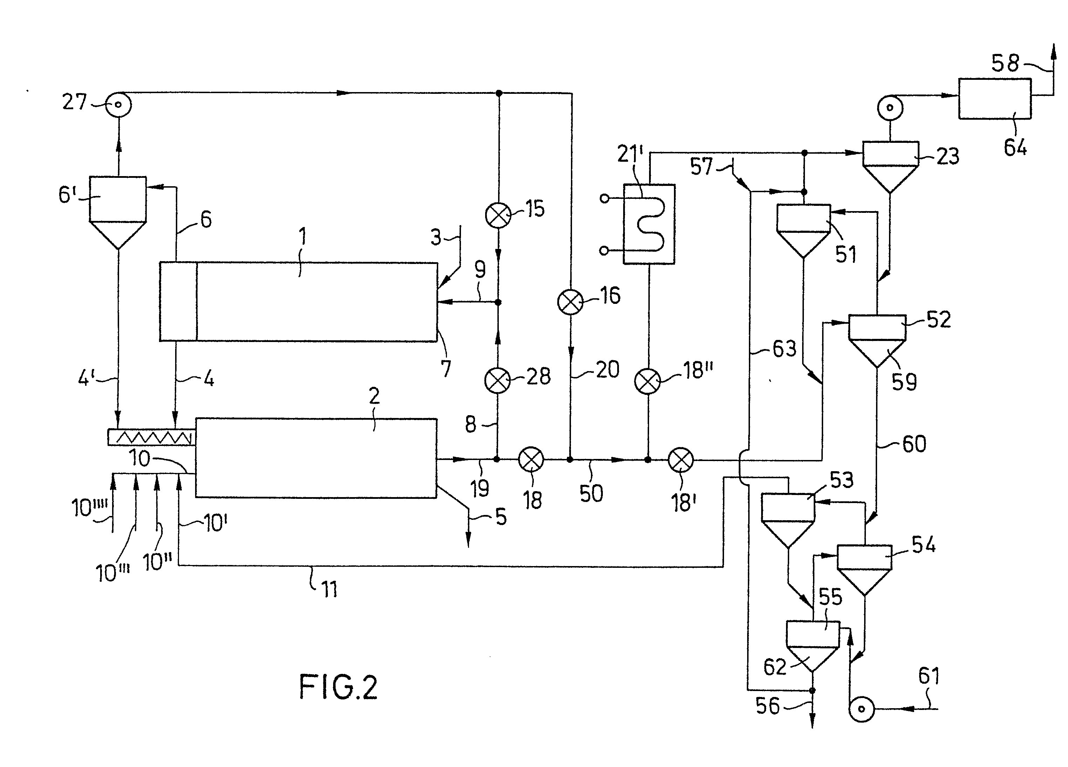

Bei der Verbrennung feuchter Abfallstoffe gemäß dem Beispiel in Fig. 2 kommt es wesentlich auf den Feststoffwärmetauscher zur Erwärmung der Brennluft an.

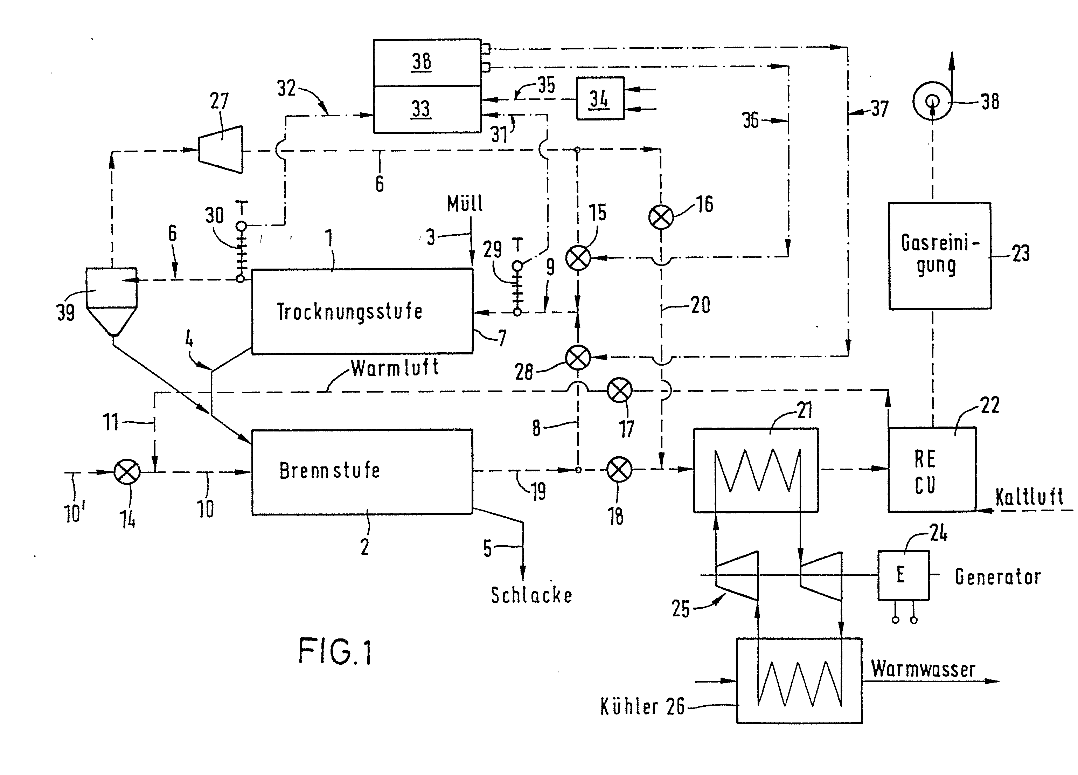

Charakteristisch sind die Gaskreisläufe der Trocknungsstufe 1 und der Brennstufe 2. In Fig. 1 wird der Müll bei 3 aufgegeben. Getrockneter Müll wird entsprechend dem Linienzug 4 der Brennstufe 2 aufgegeben. Diese trägt als Brennprodukt bei 5 schmelzflüssige Schlacke aus. Trocknungsgas wird an der Austragsseite der Trocknungsstufe 1 abgezogen und nach Abscheidung nicht-gasförmiger Stoffe in einer Trennstufe 39 mit der Leitung 6 zur Aufgabeseite 7 der Trocknungsstufe 1 teilweise zurückgeführt und dabei mit Abgas der Brennstufe 2 aus der Leitung 8 zum ersten Mischgas 9 vermengt und als Trocknungsgas in die Trocknungsstufe 1 eingeleitet. Vom Trocknerabgas in der Trennstufe 39 abgetrennte nicht-gasförmige Stoffe werden der Brennstufe 2 zugeführt und darin gemeinsam mit dem übrigen Abfall verbrannt. In den Kreislauf des Systemgases ist ein Gebläse 27 eingeschaltet, welches die für den Gastransport erforderliche Druckenergie liefert.

Brennluft wird der Brennstufe 2 mit der Leitung 10 zugeführt. Dabei kann es sich um kalte Frischluft aus der Leitung 10' oder um angewärmte Luft aus der Leitung 11 handeln. Im System der Gasführungen können einstellbare Drosselorgane 14 bis 18 vorgesehen sein, durch welche die Mengen- und/oder Mischungsverhältnisse der Gasströme zueinander eingeregelt werden können.

Eine vorteilhafte Regelung des Systems ist aber auch mit den Ventilatoren 27 und 38 möglich, sowie mit den regelbaren Drosselorganen 15 und 16.

Eine hierfür vorgesehene Regelungseinrichtung, die der Durchführung der Regelungsverfahrensschritte nach der Erfindung dient, umfaßt wenigstens zwei Temperaturmeßstellen, und zwar eine bei 29 für die Ermittlung der Temperatur des ersten Mischgases 9, und eine weitere bei 30 für die Ermittlung der Trocknerabgas-Temperatur. Von diesen führen Signalleitungen 31 und 32 zu einer Regel- und Vergleichereinheit 33, der die entsprechenden temperaturkonformen elektrischen Signale aufgeschaltet werden. Diese Einheit 33 vergleicht die Temperatur-IST-Werte mit Vorgabe-SOLL-Werten, die der Vergleichereinheit von der Sollwert-Eingabe-Einheit 34 mit der Signalleitung 35 aufgeschaltet werden. Im Falle von Ungleichheit der SOLL/IST-Werte wird in der Rechner-Einheit 38 ein Korrektur-Impuls errechnet und mit Hilfe der Steuerleitungen 36 und 37 eine Einstellbewegung der Drosselorgane 15 und 28 veranlaßt. Diese werden, vorzugsweise mit Verzögerungsdämpfung, so lange eingestellt, bis eine Gleichheit der SOLL/IST-Werte erreicht ist und die Stellimpulse gegen Null abgeklungen sind.

Für den Fachmann selbstverständlich, kann die Regeleinrichtung auch noch zur Einstellung weiterer Drosselorgane 14, 16, 17, 18 und/oder beispielsweise zur Beeinflussung der Geschwindigkeit des Systemgebläses 27 erweitert werden, wenn dies nach fachlichem Ermessen fallweise als erforderlich angesehen werden sollte.

Das Abgas der Brennstufe 2 wird mit der Leitung 19 ausgetragen und nach Mischung mit dem Teil der Trocknerabgase, die nicht zum ersten Mischgas geführt werden, zu einem zweiten Mischgas vermengt.

Dieses wird zur Gewinnung von Nutzenergie einer beispielsweise zweistufigen Wärmeübertragungseinrichtung 21 und 22 zugeführt und danach über eine Gasreinigungseinrichtung 23, beispielsweise einen Rauchgaswäscher und einen Entstauber, in die Atmosphäre abgeführt. In der ersten Wärmeübertragungseinrichtung 21 wird ein wesentlicher Teil der nutzbaren Wärme des zweiten Mischgases auf relativ hohem Temperaturniveau, zum Beispiel um 900 °C, genutzt, um beispielsweise eine rein schematisch dargestellte Abgasturbine 25 zu betreiben und mit dieser über einen Generator 24 Strom zu erzeugen. Ein im Kreislauf der Abgasturbine 25 angeordneter Kühler 26 kann darüberhinaus zusätzlich noch zur Heißwasserbereitung herangezogen werden. Das in der Wärmeübertragungseinrichtung 21 wärmewirtschaftlich genutzte und dabei temperaturerniedrigte zweite Mischgas gelangt in den Rekuperator 22, worin durch erneuten Wärmeaustausch Luft erwärmt und als warme Brennluft mit der Leitung 11 der Brennstufe 2 zugeführt wird.

Im folgenden wird ein Zahlenbeispiel zur Abschätzung der Größenordnung von Menge und Temperaturen der Gasströme bei Einsatz von Hausmüll entsprechend der Erfindung vorgelegt.

Der Rechnung sind folgende Angaben zugrunde gelegt:

- unterer Heizwert Müll            2000 kcal/kgM

                                            (M = feuchter Müll)

| | |
|---|---|
| - Müllfeuchtigkeit | 30 % |
| - Wärmeaufwand zur Trocknung (incl. Verluste) | 800 kcal/kg $H_2O$ |
| - Trocknerabgastemperatur | 150 °C |
| - Luftüberschuß der Verbrennung | 20 % |
| - Verbrennungswärmeverluste | 10 % |
| - Ofenabgastemperatur | 1200 °C |
| - $C_p$ Ofenabgas | 0,4 kcal/Nm$^3$ °C |

Damit ergibt sich:

1.) Wärmeaufwand zum Trocknen der Abfälle
= 0,30 x 800 = 240 kcal/kgM
Diese Energie muß der Brennstufe entnommen werden.

2.) Das erfordert eine Entnahme des 1200 °C heißen Gases aus der Brennstufe von

$$\frac{240 \text{ kcal/kgM}}{0,4 \text{ kcal/Nm}^3 \cdot \text{°C} \times (1200 - 150 \text{ °C})}$$

= 0,57 Nm$^3$/kgM

3.) Die Abgasmenge aus der Brennstufe läßt sich wie folgt abschätzen:

Die Rauchgasmenge bei Verbrennung von feuchtem Müll beträgt bei einem Heizwert von 2000 kcal/kgM und einem Luftüberschuß von erfahrungsgemäß 20 % etwa 4,20 $Nm^3$/kgM. 30 % Feuchtigkeit werden jedoch bereits in der Trocknungsstufe ausgetragen.

Bei einem spezifischen Gewicht des Wasserdampfes von 0,768 kg/$Nm^3$ beträgt das spezifische Volumen 0,3/0.768 = 0,39 $Nm^3$/kgM. Bei vollständiger Trocknung des Mülls im Trockner ist deshalb mit einer tatsächlichen Rauchgasmenge aus der Brennstufe von 4,20 - 0,39 = 3,81 $Nm^3$/kgM zu rechnen.

Die Menge Ofenabgas der Brennstufe, die in die Trocknungsstufe zu leiten ist, entspricht 0,57/3.81 = 15 % der Rauchgas-Gesamtmenge (siehe Anspruch 5).

4.) Bei der Verbrennung von Abfall und angenommenen Wärmeverlusten (Schlackenwärme und Wandverluste) von 10 % ergibt sich eine Temperatur der Abgase der Brennstufe von etwa:

$$\frac{2000\ (1 - 0,10)}{0,4 \times 3,81} = 1180\ °C;$$

Dies entspricht in etwa dem oben angenommenen Ausgangswert von 1200 °C.

5.) Fährt die Trocknungsstufe zum Beispiel mit einer Abgasmenge von 3 $Nm^3$/kgM, wobei 10 % davon, das heißt 0,3 $Nm^3$/kgM, mit Falschluft zu veranschlagen wären und 0,39 $Nm^3$/kgM aus dem Wasserdampf stammen, so wären folgende Teilmengen des Trocknerabgases mit Abgas aus der Brennstufe zum zweiten Mischgas zu vermengen:

- 22 -

0204888

$0,57 + 0,3 + 0,39 = 1,26 \text{ Nm}^3/\text{kgM}.$

6.) Die Restmenge, das heißt $3,00 - 1,26 = 1,74$ $\text{Nm}^3/\text{kgM}$, wird mit dem $0,57 \text{ Nm}^3/\text{kgM}$ Teilabgas der Brennstufe zum ersten Mischgas vermengt und in die Trocknungsstufe zurückgeführt. Es ergibt sich eine Menge des ersten Mischgases von $0,57 + 1,74 = 2,31 \text{ Nm}^3/\text{kgM}$ mit einer Temperatur von etwa

$$\frac{1200 \times 0,4 \times 0,57 + 150 \times 1,74 \times 0,36}{(0,57 + 1,74) \, 0,38} = 420 \text{ °C}.$$

7.) Bei vollständiger Trocknung wird im Trockner eine Wassermenge von $0,39 \text{ Nm}^3/\text{kgM}$ abgeführt. Im Gleichgewichtszustand muß diese Wasserdampfmenge vollständig mit der Teilmenge der Trocknerabgase abgeführt werden, die zum zweiten Mischgas führt. Da diese $1,26 \text{ Nm}^3/\text{kgM}$ beträgt, entspricht der Wasserdampfgehalt des Trocknerabgases $0,39/1,26 = 31 \%$ (in Wirklichkeit liegt er etwas höher, da auch die Abgase aus der Verbrennung, welche in die Trocknungsstufe geführt werden, Wasser als Verbrennungsprodukt enthalten).

8.) Die abgeführten Abgase der Trocknungsstufe werden mit den restlichen Abgasen der Brennstufe zum zweiten Mischgas vermengt. Es ergibt sich eine Menge von

$1,26 + 3,81 - 0,57 = 4,5 \text{ Nm}^3\text{kgM}$ bei einer Temperatur von etwa:

$$\frac{1200 \times 0,4 \times (3,81 - 0,57) + 150 \times 0,36 \times 1,26}{(1,26 + 3,81 - 0,57) \, 0,39}$$

$= 925 \text{ °C}$

9.) Variable in obiger Rechnung ist die angenommene Abgasmenge des Trockners: Legt man andere Trocknerabgasmengen bei sonst gleichen Bedingungen zugrunde und führt die gleiche Rechnung durch wie zuvor, so erhält man folgende Wertetabelle:


A)   Trockner-Abgasmenge ($Nm^3$/kgM):        +)

1,5;        2,0;       3,0;        4,0;         5,0;


B)   Teilmenge Trocknerabgas zum zweiten Mischgas ($Nm^3$/kgM):

1,11;      1,16;      1,26;       1,36;        1,46;


C)   Teilmenge Trocknerabgas zum ersten Mischgas ($Nm^3$/kgM):

0,39;      0,84;      1,74;       2,64;        3,54;


D)   <u>C/A (%)</u>:

26,0;      42,0;      58,0;       66,0;        70,8;


E)   <u>Temperatur erstes Mischgas (°C)</u>

787;       588;       419;        346;         306;

F) Temperatur zweites Mischgas (°C)

952;        943;        925;        908;        891;

G) Wasserdampfgehalt Trocknerabgas (%)

35,1;     33,6;     31,0;     28,7;     26,7;

x   x   x   x   x

+) Temperatur jeweils 150 °C angenommen

Aus den Rechnungen ist zu folgern, daß das System bei Einsatz von Hausmüll vorteilhaft mit mindestens 2,0 oder 3,0 $Nm^3$/kgM Abgasmenge der Trocknerstufe zu fahren ist, da sonst die Temperatur des ersten Mischgases eine unerwünschte Größenordnung annimmt. Infolgedessen ist es angebracht, das System für 3,0 bis 5,0 $Nm^3$/kgM auszulegen.

Die hohe Verbrennungstemperatur von etwa 1200 °C stellt sich in allen Fällen ein, so daß sich keine polychlorierten Kohlenwasserstoffe bilden können, beziehungsweise eventuell vorhandene toxische organische Verbindungen zersetzt werden.

Das erste Mischgas stellt sich in jedem Fall auf Temperaturen von über 800 °C ein, so daß die Zersetzung von geruchsbelästigenden Verbindungen, die bei der Trocknung entstehen können, gewährleistet ist. Bei Abfällen mit geringerem Heizwert und/oder höheren Feuchtigkeitsgehalten empfiehlt es sich, die Verbrennungsluft vorzuwärmen, um diese vorteilhaften Temperaturverhältnisse einhalten zu können.

Aus der Abhängigkeit der Temperatur des ersten Mischgases von der verhältnismäßigen Zusammensetzung aus Trocknerabgasmenge und Ofenabgasmenge leitet sich die vorteilhafte Wirksamkeit der mit dem Verfahren nach der Erfindung vorgesehenen Maßnahmen zur Regelung entsprechend den in den Ansprüchen 6 bis 8 vorgesehenen Merkmalen ab.

Damit erfüllt die Erfindung in optimaler Weise die in der Aufgabenstellung eingangs aufgeführten Forderungen.

Wenn wie in Fig. 2 besonderes Gewicht auf die Beseitigung feuchter Abfallstoffe gelegt wird, muß gemäß der Erfindung die Brennluft vorgewärmt werden, und daher ist der Feststoffwärmetauscher etwas ausführlicher dargestellt. Die Bezugszeichen stimmen so weit wie möglich mit Fig. 1 überein.

Der Schlamm wird in der Trocknungsstufe 1 vorgetrocknet und in der Brennstufe 2 verbrannt. Bei 3 wird Schlamm zugeführt und getrocknet entsprechend dem Linienzug 4 der Brennstufe 2 aufgegeben. Diese trägt als Brennprodukt bei 5 schmelzflüssige Schlacke aus.

Trocknerabgas wird an der Austragsseite der Trocknungsstufe 1 abgezogen, durch die Leitung 6 über einen Zyklon 6' zur Aufgabeseite 7 teilweise zurückgeführt und dabei mit heißem Ofenabgas der Brennstufe 2 aus der Leitung 8 zu einem ersten Mischgas 9 vermengt. In den Kreislauf des Systems ist ein Gebläse 27 eingeschaltet, welches die für den Gastransport erforderliche Druckenergie liefert. Bei der Brennluft für die Brennstufe 2 handelt es sich um vorerwärmte Luft aus der Leitung 11. Im Bedarfsfall kann der Brennstufe 1 auch Hausmüll, Faulgas oder ein anderer Brennstoff 10'' oder Sauerstoff 10''' oder ein als Wärmeübertragungsmedium geeigneter Feststoff 10'''' zugeführt werden.

Die Steuerungs- und Regelungseinrichtungen 15, 16, 18, 18', 18'', 28 arbeiten in der bekannten Weise.

Das Ofenabgas der Brennstufe 2 wird mit der Leitung 19 ausgetragen und nach Mischung mit restlichem Trocknerabgas der Trocknungsstufe 1 aus der Leitung 20 zu einem zweiten Mischgas 50 vermengt. Ein Teil davon kann zur Gewinnung 21' von Nutzenergie abgezogen werden. Erfindungswesentlich ist die Verwendung wenigstens eines Teils der Ofenabgaswärme zur Vorerwärmung der Brennluft 11. Hier ist ein Schwebegaswärmetauscher mit Wärmetauscherzyklonen 51 bis 55 dargestellt. Es können auch Wirbelschichtwärmetauscher oder Wärmetauscher mit einem gasdurchflutbaren Wanderrost oder Schachtwärmetauscher eingesetzt werden.

In den Feststofferhitzer, der im wesentlichen aus den Zyklonen 51 und 52 besteht, gelangt mindestens 700 °C heißes zweites Mischgas 50 mit feinkörnigem Feststoff innig in Kontakt, und es überträgt einen Teil des Wärmeinhalts auf den Feststoff. Der erhitzte Feststoff 59 wird über die Leitung 60 durch den Verbrennungslufterhitzer, der im wesentlichen aus den Zyklonen 53, 54 und 55 besteht, durchgeleitet, wobei die bei 61 eintretende Verbrennungsluft aufgeheizt wird, ehe sie über die Leitung 11 in die Brennstufe 2 eingeleitet wird. Besonders bevorzugt wird die Verbrennungsluft auf 500 bis 700 °C vorgewärmt. Es stellen sich dann hohe Ofenabgastemperaturen bei relativ geringem stöchiometrischen Luftüberschuß ein, was allgemein zu einer Verringerung der Ofenabgasmenge führt und damit auch die Kosten für die Rauchgasreinigung fühlbar erniedrigt. Der im Zyklon 55 anfallende Feststoff 62 wird über die Leitung 63 zum Feststoffvorwärmer rezirkuliert; die im Feststoff nach dessen Abkühlung verbliebene Restwärme bleibt bei der Rezirkulierung annähernd erhalten, wodurch der thermische Wirkungsgrad des Wärmeaustauschkreislaufs erhöht wird.

Ein Teil des Wärmetauscherfeststoffes gelangt über die Brennluftleitung 11 in Form von Staub in die Brennstufe 2. Der Pfeil 56 soll andeuten, daß verbrauchter Feststoff zur Deponie abgeführt wird; die Zugabe 57 von frischem Feststoff kann an verschiedenen Stellen erfolgen. Als Wärmeübertragungsmedien kommen bevorzugt Mineralien mit Anteilen von Calciumoxid, Magnesiumoxid, Siliziumoxid, Eisenoxid oder ähnlichem infrage, die auch als Grundstoffe zur Herstellung von hydraulischen Bindemitteln verwendet werden. Sie sind deshalb besonders geeignet, weil sie im thermisch aktivierten Zustand hochaktive Adsorptionsmittel für im Rauchgas enthaltene Schadstoffe sind. Hierdurch und durch weitere Nachbehandlungsstufen zur Entstaubung wird von der Anlage gereinigtes und insbesondere neutralisiertes sowie entstaubtes Abgas 58 in die Atmosphäre abgegeben. Der in einer Entstaubungsanlage 64 anfallende Staub kann in den Feststoffkreislauf rezirkuliert oder deponiert werden.

Die folgende Überschlagsrechnung zeigt, daß mit dem erfindungsgemäßen Verfahren Klärschlamm mit einer Restfeuchte von 60 % ohne Zusatzbrennstoff verbrannt werden kann und die zweite Mischgastemperatur über 700 °C liegt, also keine Geruchsbelästigungen aus der Schlammbeseitigung zu erwarten sind.

Im folgenden ist mit der Bezeichnung TS das Wort Trockensubstanz abgekürzt. Es wird von einem Klärschlamm mit 40 % TS und einem Heizwert von 3000 kcal/kg TS ausgegangen. Der Wärmeaufwand im Trockner inclusiv Verluste betrage 800 kcal/kg $H_2O$.

Eine weitere Vorgabe ist die Temperatur des ersten Mischgases: Die Eingangstemperatur am Trockner betrage 400 °C, die Ausgangstemperatur 100 °C.

Bei einer Vortrocknung auf 15 % Restfeuchte sind pro kg TS demnach 1,32 kg $H_2O$ /kg TS zu verdampfen, das heißt es fallen 1,72 $Nm^3$/kg TS an.

Der Wärmeaufwand im Trockner beträgt 1,32 x 800 = 1060 kcal/kg TS.

Die erforderliche Gasmenge am Eingang des Trockners beträgt dafür 9,54 $Nm^3$/kg TS. (9,54 x (400 - 100) x 0,37 = 1060) Das führt am Ausgang des Trockners zu einer Abgasmenge von 11,26 $Nm^3$/kg TS.

Unter den oben gemachten Angaben über den Heizwert des Schlammes und bei einer Luftüberschußzahl von 1,2 ergibt sich aus dem Verbrennungsofen eine Gesamtabgasmenge von 4,7 $Nm^3$/kg Trocknerprodukt, beziehungsweise 5,53 $Nm^3$/kg TS. Ferner ergibt sich unter Zugrundelegung dieser Werte ein Verbrennungsluftbedarf von 3,0 $Nm^3$/kg Trocknerprodukt, beziehungsweise 3,53 $Nm^3$/kg TS.

Die Verbrennungsluft wird in diesem Beispiel entsprechend der Erfindung auf 500 °C vorgewärmt. Der Wärmeinhalt beträgt demnach 3,53 x 0,32 x (500-20) = 542 kcal/kg TS. Diese Wärme zuzüglich der Verbrennungswärme von 3000 kcal/kg TS ergibt eine gesamte Wärmemenge von 3542 kdcal/kg TS.

Davon sind für die Wasserverdampfung 106 kcal/kg TS, sowie Wand- und Schlackeverluste (10 %) von 356 kcal/kg TS aufzuwenden, so daß in den Abgasen 3080 kcal/kg TS verbleiben, was zu einer Temperatur des Abgases aus der Verbrennung von 1410 °C führt.

Die Abgasmenge, die aus dem Verbrennungsofen zum ersten Mischgas zu führen ist, errechnet sich daraus zu 1,91 $Nm^3$/kg TS.
(1,91 x (1410 - 20) x 0,4 = 1060)

Die Abgasmenge, die vom Trockner zum zweiten Mischgas zu führen ist, beträgt 4,18 $Nm^3$/kg TS, denn es sind abzuführen 1,72 $Nm^3$/kg TS, die aus der Wasserverdampfung stammen, 1,91 $Nm^3$/kg TS, die aus dem Ofen in den Trockner geführt werden und 0,55 $Nm^3$/kg TS, die durch Falschluft (5 %) in das Trocknersystem gelangen.
Der Wärmeinhalt dieses Abgases beträgt bei 100 °C 120 kcal/kg TS. (4,18 x 0,36 x (100 - 20) = 120).

Die Ofenabgasmenge, die zum zweiten Mischgas geführt wird, beträgt 5,53 - 1,91 = 3,62 $Nm^3$/kg TS und hat einen Wärmeinhalt von 3080 - 1060 = 2020 kcal/kg TS.
Das Vermischen der beiden Ströme führt zu einer Menge von 7,80 $Nm^3$/kg TS mit einem Wärmeinhalt von 2140 kcal/kg TS, woraus sich eine Temperatur dieses zweiten Mischgases von 740 °C errechnet.
Diese Temperatur reicht aus, um geruchsbildende Bestandteile des Schlamms zu zerstören und die Verbrennungsluft auf 500 °C vorzuwärmen.

In dieser Abschätzung wurde die Eingangstemperatur des Trocknergases auf 400 °C festgelegt. Mit höheren Gaseintrittstemperaturen in den Trockner ließen sich die Kreislaufgasmengen der Trocknung und somit die Stromaufnahme des Umluftventilators reduzieren. Dabei stellt sich dann allerdings eine höhere Wasserdampfbeladung des Kreislaufgases ein. Die restliche Wärmebilanz ändert sich im Vergleich zu der oben angeführten nur unwesentlich. Eine Verschwelung oder eine Zündung des Gemisches spräche eher dagegen, die Temperatur am Trocknereintritt zu hoch zu machen.

Wie die Überschlagsrechnung zeigt, fallen 7,8 $Nm^3$/kg TS des zweiten Mischgases bei einer Temperatur von 740 °C an. Diese werden genutzt, um die Verbrennungsluft aufzuheizen. Es müssen jedoch nur 3,53 $Nm^3$ Luft/kg TS auf 500 ° erhitzt werden. Es ergibt sich also ein erheblicher Wärmeüberschuß, der zu einer anderweitigen Energieumwandlung genutzt werden kann.

Patentansprüche

1. Verfahren zum Verbrennen von Abfallstoffen, insbesondere von Müll, wobei die Abfallstoffe in einem ersten Verfahrensschritt in einer Trocknungsstufe getrocknet werden, wobei Trocknerabgas anfällt, und in einem zweiten Verfahrensschritt in einer Brennstufe verbrannt werden, wobei Ofenabgas anfällt, dadurch gekennzeichnet, daß jeweils ein Teil Ofenabgas der Brennstufe und ein Teil Trocknerabgas der Trocknungsstufe abgezweigt und zu einem ersten Mischgas vermengt werden, und daß das erste Mischgas zur Trocknungsstufe zurückgeführt und zum Trocknen der Abfallstoffe verwendet wird, und daß der restliche Teil Ofenabgas mit dem restlichen Teil Trocknerabgas zu einem zweiten Mischgas vermengt wird, und daß dessen nutzbarer Wärmeinhalt zur Gewinnung von Nutzenergie verwendet wird.

2. Verfahren nach Anspruch 1, dadurch gekennzeichnet, daß das Trocknerabgas in einer Trennstufe von mitgeführten, nicht gasförmigen Stoffen getrennt wird und die abgetrennten Stoffe den zu verbrennenden Abfällen zugeschlagen werden.

3. Verfahren nach Anspruch 1 oder 2, dadurch gekennzeichnet, daß der Wärmeinhalt des zweiten Mischgases in vorzugsweise zwei Stufen zur Gewinnung von Nutzenergie verwendet wird, wobei in einer ersten Stufe auf relativ hohem Temperaturniveau beispielsweise Dampf oder mechanische oder elektrische Energie gewonnen, und in einer zweiten Stufe auf relativ niedrigem Temperaturniveau Nutzwärme an ein Wärmeträgermedium, vorzugsweise zum Erwärmen der Brennluft für die Brennerstufe, abgegeben wird.

4. Verfahren nach einem oder mehreren der Ansprüche 1 bis 3, dadurch gekennzeichnet, daß dem ersten Mischgas zwischen 40 und 80, bevorzugt zwischen 55 und 70 Volumenprozent der Trocknerabgasmenge zugeführt werden.

5. Verfahren nach einem oder mehreren der Ansprüche 1 bis 4, dadurch gekennzeichnet, daß dem ersten Mischgas zwischen 5 und 40, bevorzugt zwischen 10 und 20 Volumenprozent der Ofenabgasmenge zugeführt werden.

6. Verfahren nach einem oder mehreren der Ansprüche 1 bis 5, dadurch gekennzeichnet, daß das Verhältnis der dem ersten Mischgas zugeführten Trocknerabgasmenge zur Ofenabgasmenge nach Maßgabe der Temperatur des ersten Mischgases eingestellt wird, wobei diese Temperatur von der erforderlichen Leistung der Trocknungsstufe, das heißt der durchgesetzten Menge der Abfallstoffe und deren durchschnittlichem Wassergehalt je kg feuchtem Abfall, abhängt.

7. Verfahren nach einem oder mehreren der Ansprüche 1 bis 6, dadurch gekennzeichnet, daß die Temperatur des ersten Mischgases nach Maßgabe der Temperatur des Trocknerabgases am Ausgang der Trocknungsstufe eingestellt wird.

8. Verfahren nach einem oder mehreren der Ansprüche 1 bis 7, dadurch gekennzeichnet, daß die Trocknungsstufe mit gleichbleibend eingestellter Temperatur des ersten Mischgases oder mit gleichbleibend eingestellter Temperatur des Trocknerabgases betrieben wird.

9. Verfahren nach einem oder mehreren der Ansprüche 1 bis 8, dadurch gekennzeichnet, daß zur Trocknung der Abfallstoffe ein Trommeltrockner verwendet wird.

10. Verfahren nach einem oder mehreren der Ansprüche 1 bis 9, dadurch gekennzeichnet, daß zur Verbrennung der Abfallstoffe ein Drehrohrofen verwendet wird.

11. Verfahren nach einem oder mehreren der Ansprüche 1 bis 10, dadurch gekennzeichnet, daß die Abfallstoffe vor der Trocknung zerkleinert werden.

12. Verfahren nach einem oder mehreren der Ansprüche 1 bis 11, dadurch gekennzeichnet, daß die Abfallstoffe unmittelbar nach ihrer Trocknung und vorzugsweise unter Erhalt ihres fühlbaren Wärmeinhalts der Verbrennung zugeführt werden.

13. Verfahren nach einem oder mehreren der Ansprüche 1 bis 12, dadurch gekennzeichnet, daß die Verbrennung der Abfallstoffe unter Zugabe von kalkhaltigen Mineralstoffen, vorzugsweise in Form von Gesteinsmehl, vorgenommen wird.

14. Verfahren nach einem oder mehreren der Ansprüche 1 bis 13, dadurch gekennzeichnet, daß die Verbrennung der Abfallstoffe, vorzugsweise mit vorgewärmter Brennluft bis 800 °C, bei 1200 °C oder höheren Temperaturen durchgeführt wird.

15. Verfahren nach einem oder mehreren der Ansprüche 1 bis 14, dadurch gekennzeichnet, daß die Asche der Brennstufe schmelzflüssig in ein Wasserbad ausgetragen wird.

16. Verfahren nach einem oder mehreren der Ansprüche 1 bis 15, dadurch gekennzeichnet, daß als Abfallstoff Schlamm, insbesondere Klärschlamm, allein oder in Verbindung mit anderen Abfallstoffen eingesetzt wird
und zumindest ein Teil der Nutzenergie zur Vorerwärmung
der Verbrennungsluft für die Brennstufe eingesetzt wird.

17. Verfahren nach einem oder mehreren der Ansprüche 1
bis 16, dadurch gekennzeichnet, daß die Temperatur des
zweiten Mischgases mindestens 700 °C beträgt, wobei
Zusatzbrennstoff in die Brennstufe einzuspeisen ist,
wenn der Wassergehalt des Schlamms zu groß sein sollte,
um diese Temperatur zu erreichen.

18. Verfahren nach einem oder mehreren der Ansprüche 1
bis 17, dadurch gekennzeichnet, daß die
Verbrennungsluft mit Hilfe eines Feststoffes als
Wärmeübertragungsmedium vorerwärmt wird.

19. Verfahren nach einem oder mehreren der Ansprüche 1
bis 18, dadurch gekennzeichnet, daß das vorzugsweise in
feinkörniger Form vorliegende Wärmeübertragungsmedium
mineralische Feststoffe, wie beispielsweise Kalk oder
Kalkstein, enthält, deren Komponenten Aktivitäten zur
chemischen oder adsorptiven Bindung von bei der
Abfallverbrennung freigesetzten Schadstoffen besitzen.

20. Verfahren nach einem oder mehreren der Ansprüche 1
bis 19, dadurch gekennzeichnet, daß als
Wärmeübertragungsmedium ein Teil der beim
Abfallverbrennungsprozeß anfallenden, vorzugsweise
granulierten Schlacke verwendet wird.

21. Verfahren nach einem oder mehreren der Ansprüche 1
bis 20, dadurch gekennzeichnet, daß das Aufheiz- und
Kühlstufen durchlaufende Wärmeübertragungsmedium
wenigstens zum überwiegenden Teil mehrfach im Kreislauf
durch das Wärmeübertragungssystem geführt wird und ihm nach Maßgabe seiner Anreicherung mit Schadstoffen frischer Feststoff zugeführt und verbrauchter Feststoff abgeführt wird.

22. Verfahren nach einem oder mehreren der Ansprüche 1 bis 21, dadurch gekennzeichnet, daß die Abfallverbrennung mit einem Brenngas durchgeführt wird, welches gegenüber der Verbrennungsluft einen erhöhten Sauerstoffgehalt aufweist, beziehungsweise daß zusätzlich zur vorgewärmten Verbrennungsluft Sauerstoff in die Feuerung der Brennstufe eingespeist wird.

FIG.1

38

33

35 34

32

27

6

30 T

6

39

1

Trocknungsstufe

Müll

3

29 T

9

15

16

31

36

37

38

Gasreinigung 23

20

Warmluft

28

8

17

4

11

Brennstufe

19

18

21

22

RE CU

14

10

2

Kaltluft

10'

5

Schlacke

24

E — Generator

25

Kühler 26

Warmwasser

0204888

-1/2-

FIG.2

### Europäisches Patentamt

## EUROPÄISCHER RECHERCHENBERICHT

| EINSCHLÄGIGE DOKUMENTE | | | EP 86102008.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| X | DE - B - 1 207 896 (KOHLENSCHEI-DUNGS-GESELLSCHAFT) | 1,2,8, 16 | F 23 G 5/04 |
| Y | * Gesamt * -- | 3,9,12-14 | |
| Y | DE - B - 1 908 612 (STEIN-IN-DUSTRIE) | 3,9,12, 14 | |
| | * Gesamt * -- | | |
| X | AT - B - 263 189 (VON ROLL) | 1-3,12, 14,15, 17 | |
| | * Fig. 1 * -- | | |
| A | DE - C - 967 629 (BAUMEISTER) | 1,8,12, 14,16 | |
| | * Gesamt * -- | | |
| Y | EP - A2 - 0 124 827 (DEFO-CHEMIE) | 13 | |
| | * Patentanspruch 1 * -- | | |
| D,A | US - A - 2 117 487 (LEWERS) -- | | |
| D,A | DE - B2 - 2 338 318 (THE ASSOCIA-TED PORTLAND CEMENT MANUFACTURERS) -- | | |
| D,A | DE - A - 1 751 233 (KLÖCKNER-HUM-BOLT-DEUTZ) -- | | |

| RECHERCHIERTE SACHGEBIETE (Int. Cl 4) |
|---|
| F 23 G 5/00 |
| F 23 G 7/00 |
| F 23 J 1/00 |
| F 23 J 7/00 |
| F 23 L 7/00 |
| C 02 F 11/00 |

Der vorliegende Recherchenbericht wurde für alle Patentansprüche erstellt.

| Recherchenort | Abschlußdatum der Recherche | Prüfer |
|---|---|---|
| WIEN | 22-09-1986 | TSCHÖLLTISCH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82

**0204888**

Nummer der Anmeldung

# EUROPÄISCHER RECHERCHENBERICHT

| | EINSCHLÄGIGE DOKUMENTE | | EP 86102008.9 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| D,A | BILD DER WISSENSCHAFT, 21. Jahrgang, Heft 11, November 1984, Stuttgart, Deutsche Verlags-Anstalt<br><br>M. SCHWENK "Wie gefährlich ist Dioxin wirklich"<br>Seiten 64-76<br><br>---- | | | |
| | | | **RECHERCHIERTE SACHGEBIETE (Int. Cl.4)** | |

Der vorliegende Recherchenbericht wurde für alle Patentansprüche erstellt.

| Recherchenort | Abschlußdatum der Recherche | Prüfer |
|---|---|---|
| WIEN | 22-09-1986 | TSCHÖLLTISCH |